(19) Europäisches Patentamt
European Patent Office
Office européen des brevets

(11) **EP 3 586 455 B1**

(12) **EUROPÄISCHE PATENTSCHRIFT**

(45) Veröffentlichungstag und Bekanntmachung des Hinweises auf die Patenterteilung:
**21.04.2021 Patentblatt 2021/16**

(21) Anmeldenummer: **18707864.7**

(22) Anmeldetag: **14.02.2018**

(51) Int Cl.:
**H04B 15/02** *(2006.01)*     **H02P 27/08** *(2006.01)*

(86) Internationale Anmeldenummer:
**PCT/EP2018/053675**

(87) Internationale Veröffentlichungsnummer:
**WO 2018/153749 (30.08.2018 Gazette 2018/35)**

(54) **VERFAHREN ZUR STEUERUNG EINES ELEKTRISCHEN VERBRAUCHERS MITTELS PULSWEITENMODULATION**

METHOD FOR CONTROLLING AN ELECTRICAL LOAD BY MEANS OF PULSE WIDTH MODULATION

PROCÉDÉ DE COMMANDE D'UN CONSOMMATEUR ÉLECTRIQUE PAR MODULATION D'IMPULSIONS EN LARGEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.02.2017 DE 102017001788**

(43) Veröffentlichungstag der Anmeldung:
**01.01.2020 Patentblatt 2020/01**

(73) Patentinhaber: **KOSTAL Automobil Elektrik GmbH & Co. KG**
**58513 Lüdenscheid (DE)**

(72) Erfinder:
• **HEES, Norbert**
**44139 Dortmund (DE)**
• **WIEGAND, Marc**
**44265 Dortmund (DE)**
• **BENDICKS, Andreas**
**58579 Schalksmühle (DE)**
• **FREI, Stephan**
**44229 Dortmund (DE)**

(74) Vertreter: **Kerkmann, Detlef**
**Leopold Kostal GmbH & Co. KG**
**An der Bellmerei 10**
**58513 Lüdenscheid (DE)**

(56) Entgegenhaltungen:
**DE-A1-102011 118 044     JP-A- 2004 208 468**
**US-A1- 2012 052 813**

## EP 3 586 455 B1

**Beschreibung**

Die Erfindung betrifft ein Verfahren zur Steuerung eines elektrischen Verbrauchers mittels Pulsweitenmodulation, wobei eine Soll-Schaltfrequenz und ein Soll-Tastverhältnis vorgegeben werden, wobei die Trägerfrequenz eines eingestellten Radiosenders festgestellt wird, und wobei die Ist-Schaltfrequenz an die Trägerfrequenz des Radiosenders so angepasst wird, dass ein ganzzahliges Vielfaches der Ist-Schaltfrequenz gleich der Trägerfrequenz ist.

Zur Regelung der Leistung elektrischer Verbraucher wird häufig eine Pulsweitenmodulation (PWM) verwendet. Mögliche Anwendungen sind beispielsweise die Ansteuerung von Heizelementen oder von Elektromotoren für Lüfter oder Verstelleinrichtungen. Einem elektrischen Verbraucher ist dabei ein Steuergerät zugeordnet, das eine periodische Folge von Rechteckpulsen erzeugt, deren Breite moduliert ist. Die Versorgungsspannung wird dabei abwechselnd ein- und ausgeschaltet, wobei das sogenannte Tastverhältnis d, das als das Verhältnis der Einschaltzeit zur Periodendauer definiert ist, so bemessen ist, dass im Mittel eine Spannung d*$U_{max}$ anliegt, wobei $U_{max}$ der Scheitelwert der Versorgungsspannung ist. Herkömmliche Steuergeräte werden etwa mit einer konstanten PWM-Frequenz betrieben, die typischerweise im Bereich zwischen etwa 10 kHz und 100 kHz liegen kann.

Es ist bekannt, dass die Ansteuerung elektrischer Verbraucher durch Pulsweitenmodulation Störungen verursacht, die sich z. B. während des Radioempfangs als Störgeräusche äußern. Durch das Schalten der Spannung entstehen im Signal Oberwellen, sogenannte "Harmonische", welche Frequenzkomponenten bis in Rundfunkempfangsbereiche enthalten können. Dadurch kann es insbesondere auch im Mittelwellenband zu hörbaren Beeinflussungen der Empfangsgeräte kommen. Diese Störungen sind insbesondere dann hörbar, wenn die Oberwelle in der Übertragungsbandbreite des eingestellten Radiosenders ist.

Aus der DE 10 2011 118 044 A1 ist ein Verfahren gemäß dem Oberbegriff des Patentanspruchs 1 bekannt, bei dem zur Eliminierung solcher Störungen die Schaltfrequenz der PWM in der Art an die zuvor festgestellte Trägerfrequenz des zu entstörenden Radiosenders angepasst wird, dass ein ganzzahliges Vielfaches der Schaltfrequenz dieser Trägerfrequenz entspricht.

Wenn ein Vielfaches der Schaltfrequenz der PWM, also eine Harmonische aus dem Oberwellenspektrum der Schaltfrequenz mit der Trägerfrequenz übereinstimmt, ist diese im Idealfall nicht hörbar, da auf der Trägerfrequenz selbst kein Audiosignal liegt. Die oberen und unteren benachbarten Harmonischen derjenigen, die exakt mit der Trägerfrequenz übereinstimmt, liegen außerhalb der Übertragungsbandbreite, weshalb sie keine Störungen verursachen.

Bei diesem Verfahren wird davon ausgegangen, dass die Harmonische auf der Trägerfrequenz erstens so gering ist, dass Sie den Träger nicht übersteuert, dieser also noch erkennbar ist. Zweitens wird davon ausgegangen, dass die Harmonische exakt auf der Trägerfrequenz liegt. Sind Harmonische und Trägerfrequenz jedoch nur sehr ähnlich und eben nicht identisch, kommt es zu einer Schwebung zwischen den Frequenzen, woraus sich neue Störungen ergeben können.

Das Verfahren gemäß der vorliegenden Erfindung hat gegenüber dem zuvor beschriebenen den Vorteil, dass auch die Störungen auf der Trägerfrequenz selbst minimiert werden. Damit werden die möglichen Störungen weiter reduziert.

Dies gelingt erfindungsgemäß dadurch, dass die Ist-Schaltfrequenz auf den der Soll-Schaltfrequenz nächstliegenden Wert festgelegt wird, für den die Amplitude einer Harmonischen im Oberwellenspektrum der Ist-Schaltfrequenz kleiner ist als die Amplituden ihrer unteren und oberen benachbarten Harmonischen.

In einer praktischen Realisierung des erfindungsgemäßen Verfahrens ist vorgesehen, dass das Tastverhältnis auf ein dem Soll-Tastverhältnis naheliegendes Verhältnis m/n festgelegt wird, wobei m und n natürliche Zahlen sind, und dass die Ist-Schaltfrequenz $f_{sw}$ auf einen Wert festgelegt wird, für den die Frequenz k*$f_{sw}$ den der Soll-Schaltfrequenz nächstliegenden Wert annimmt, für den k/m eine natürliche Zahl ist.

Das erfindungsgemäße Verfahren macht sich unter anderem die Erkenntnis zu Nutze, dass die Amplituden der Harmonischen im Oberwellenspektrum der Schaltfrequenz einer pulsweitenmodulierten Ansteuerung sehr unterschiedlich sein können. Während die Frequenzen der Oberwellen im Spektrum durch einen sogenannten Dirac-Kamm

$\sum_{i \in \mathbb{Z}} \delta(f - i \cdot f_{sw})$ als ganzzahlige Vielfache der Schaltfrequenz vorgegeben sind, werden deren Amplituden durch eine Einhüllende bestimmt. Diese Einhüllende kann durch eine Sinus cardinalis Funktion als

$\sqrt{2} \cdot d \cdot U_{max} \cdot sinc\left(d \cdot \frac{f}{f_{sw}}\right)$ beschrieben werden.

Es kann also gezeigt werden, dass für das Spektrum eines PWM-Signals mit unendlich steilen Schaltflanken und einer Amplitude von $U_{max}$ der folgende Zusammenhang gilt:

$$U_{Spektrum}(f) = \left| \sqrt{2} \cdot d \cdot U_{max} \cdot sinc\left(d \cdot \frac{f}{f_{sw}}\right) \cdot \sum_{i \in \mathbb{Z}} \delta(f - i \cdot f_{sw}) \right|$$

2

Bei den Frequenzen, bei welchen eine Nullstelle des Sinus cardinalis mit einer Oberwelle oder Harmonischen zusammenfällt, fehlt genau diese Oberwelle im Spektrum.

Die Nullstellen des Sinus cardinalis liegen bei den folgenden Frequenzen:

$$f_{sinc,0} = m \cdot \frac{f_{sw}}{d} \; ; \; m \in \mathbb{N}$$

Die Oberwellen des Dirac-Kamms befinden sich bei den Frequenzen:

$$f_{dirac} = n \cdot f_{sw} \; ; \; n \in \mathbb{N}$$

Für das Verfahren soll damit die nachfolgende Bedingung erfüllt sein (mit Empfangskanal $f_{ch}$):

$$f_{sinc,0} = f_{dirac} = f_{ch}$$

Im Anschluss wird ein beispielhaftes mathematisches Verfahren dargestellt, mit welchem die PWM-Frequenz entsprechend ermittelt werden kann. Dazu wird als Ausgangsgröße eine Soll-Schaltfrequenz $f_{soll}$ definiert.

Im ersten Schritt wird bestimmt, welche Nullstellen des Sinus cardinalis und welche Oberwellen zusammenfallen:

$$f_{sinc,0} = f_{dirac}$$

$$\Rightarrow m \cdot \frac{f_{sw}}{d} = n \cdot f_{sw}$$

$$\Rightarrow d = \frac{m}{n} \; (\text{gekürzt})$$

Daraus folgt, dass jede m-te Nullstelle des Sinus cardinalis mit jeder n-ten Oberwelle zusammenfällt.

Im zweiten Schritt muss ermittelt werden, welche der m-ten Nullstellen des Sinus cardinalis auf dem Empfangskanal liegen soll:

$$f_{sinc,0} = f_{ch}$$

$$\Rightarrow k = \begin{cases} nint\left\{\dfrac{d \cdot f_{ch}}{m \cdot f_{Soll}}\right\} \text{ für } nint\left\{\dfrac{d \cdot f_{ch}}{m \cdot f_{Soll}}\right\} > 0 \\ 1 \qquad \text{ für } nint\left\{\dfrac{d \cdot f_{ch}}{m \cdot f_{Soll}}\right\} = 0 \end{cases}$$

Wobei es sich bei "nint" um die Nearest Integer Function handelt. Es soll also die (k·m)-te Nullstelle des Sinus cardinalis auf dem Empfangskanal liegen.

Im dritten Schritt muss nun die Schaltfrequenz bestimmt werden:

$$k \cdot m \cdot \frac{f_{sw}}{d} = f_{ch}$$

$$\Rightarrow f_{sw} = \frac{d \cdot f_{ch}}{k \cdot m}$$

Es ist ersichtlich, dass abhängig von dem Tastverhältnis d und dem gewählten Empfangskanal $f_{ch}$ unterschiedliche Schaltfrequenzen eingestellt werden müssen. Da wie zuvor gezeigt, jede m-te Nullstelle des Sinus cardinalis mit jeder n-ten Oberwelle zusammenfällt, eignen sich solche Tastverhältnisse d = m/n besonders gut für eine Implementierung, bei denen n besonders klein ist, da ja jede n-te Oberwelle fehlt. Dies bedeutet, dass bei einem kleinen n die fehlenden Oberwellen näher zusammen liegen, und somit nur eine vergleichsweise geringe Variation der Schaltfrequenz nötig ist, um die nächstgelegene fehlende Oberwelle zu treffen, und damit den jeweiligen Empfangskanal zu entstören.

Je größer n also gewählt werden muss, um das geforderte Tastverhältnis d darzustellen, desto größer ist die möglicherweise erforderliche Änderung der Schaltfrequenz um die nächstgelegene fehlende Oberwelle zu treffen.

In solchen Fällen ergeben sich drei Möglichkeiten, um mit diesen im Sinne des Verfahrens "ungünstigen" Tastverhältnissen umzugehen:

1. Das Tastverhältnis wird beibehalten, wodurch unter Umständen sehr große Frequenzanpassungen nötig sind.

2. Es werden sowohl Schaltfrequenz als auch Tastverhältnis angepasst. Die Anwendbarkeit dieses Verfahrens ist applikationsspezifisch zu überprüfen. Sofern eine Variation des Tastverhältnisses möglich ist, kann z.B. das nächstgelegene "günstige" Tastverhältnis gewählt werden. Ggf. kann hier auch die Scheitelspannung $U_{max}$ so angepasst werden, dass sich trotz des geänderten Tastverhältnisses der durch die Pulsweitenmodulation einzustellende Mittelwert der Spannung ergibt.

3. Es wird ein modifiziertes PWM-Signal verwendet, in welchem verschiedene "günstige" Tastverhältnisse genutzt werden, um ein "ungünstiges" zu umgehen.

Als Beispiel für den unter 3. beschriebenen Fall wird angenommen, dass ein Tastverhältnis von 22% realisiert werden soll. Da sich dieses Tastverhältnis, welches mit d = m/n = 22/100 anzugeben wäre, nicht weiter als bis auf 11/50 kürzen lässt, bedeutet dies, dass nur jede 50. Oberwelle im Spektrum fehlt, und somit möglicherweise eine große Änderung der Ansteuerungsfrequenz erforderlich ist.

Es kann aber dann z.B. abwechselnd jeweils für einen Zeitraum $T_1$ ein Tastverhältnis von 20% entsprechend d = 1/5 und für einen Zeitraum $T_2$ ein Tastverhältnis von 25% entsprechend d = 1/4 eingestellt werden. $T_1$ und $T_2$ sind so zu wählen, dass sich im Mittel ein Tastverhältnis von 22% ergibt. Die Schaltfrequenzen $f_{sw1}$ und $f_{sw2}$ werden entsprechend dem beschriebenen Algorithmus bestimmt.

Es muss allgemein also die folgende Mittelung gelten, wobei beliebig viele $(i \in \mathbb{N})$ PWM-Signale kombiniert werden können:

$$d = \frac{1}{\sum T_i} \cdot \sum d_i \cdot T_i$$

Mithilfe des obigen Algorithmus wird die folgende Beziehung hergestellt:

$$f_i(f_{ch}, f_{sw,nom}, d_i)$$

Weiterhin gilt die Randbedingung, dass die Zeiten $T_i$ Vielfachen der Periodendauer entsprechen sollten, damit keine Schaltperiode vorzeitig abgebrochen wird:

$$T_i \approx \frac{l_i}{f_i} \text{ mit } (l_i \in \mathbb{N})$$

Um eine niederfrequente Oszillation $\left( f_{sum} = \frac{1}{\sum T_i} \right)$ im System zu vermeiden, wird ein alternierendes Schaltmuster vorgeschlagen. Dabei werden die PWM-Signale nicht nach der jeweiligen Zeit $T_i$ variiert sondern innerhalb eines Makrozyklus $\sum T_i$ bereits nach wenigen Pulsen alterniert. Es ist entscheidend, dass das entsprechende PWM-Signal innerhalb des Makrozyklus $\sum T_i$ in Summe für die Zeit $T_i$ wirksam war. Durch diese Alternierung wird die niederfrequente Oszillation reduziert.

Das erfindungsgemäße Verfahren kann zur Entstörung sowohl amplitudenmodulierter (AM) als auch frequenzmodulierter (FM) Radiosender eingesetzt werden.

**Patentansprüche**

1. Verfahren zur Steuerung eines elektrischen Verbrauchers mittels Pulsweitenmodulation, wobei eine Soll-Schaltfrequenz $f_{Soll}$ und ein Soll-Tastverhältnis $d_{Soll}$ vorgegeben werden, wobei die Trägerfrequenz $f_{ch}$ eines eingestellten Radiosenders festgestellt wird, und wobei die Ist-Schaltfrequenz $f_{Sw}$ an die Trägerfrequenz $f_{ch}$ des Radiosenders so angepasst wird, dass ein Vielfaches $k*f_{sw}$ der Ist-Schaltfrequenz $f_{sw}$ mit einem ganzzahligen Faktor k gleich der Trägerfrequenz $f_{ch}$ ist, **dadurch gekennzeichnet, dass** die Ist-Schaltfrequenz $f_{sw}$ auf den der Soll-Schaltfrequenz $f_{Soll}$ nächstliegenden Wert festgelegt wird, für den die Amplitude einer Harmonischen $k* f_{sw}$ im Oberwellenspektrum der Ist-Schaltfrequenz $f_{sw}$ kleiner ist als die Amplituden ihrer unteren $(k-1)* f_{sw}$ und oberen $(k+1)* f_{sw}$ benachbarten Harmonischen.

2. Verfahren nach Anspruch 1, **dadurch gekennzeichnet, dass** das Tastverhältnis d auf ein dem Soll-Tastverhältnis $d_{Soll}$ naheliegendes Verhältnis n/m festgelegt wird, wobei m und n natürliche Zahlen sind, und dass die Ist-Schaltfrequenz $f_{sw}$ auf einen Wert festgelegt wird, für den die Frequenz $k* f_{sw}$ den der Soll-Schaltfrequenz $f_{Soll}$ nächstliegenden Wert annimmt, für den k/m eine natürliche Zahl ist.

3. Verfahren nach Anspruch 2, **dadurch gekennzeichnet, dass** n kleiner oder gleich 10 ist.

4. Verfahren nach Anspruch 2, **dadurch gekennzeichnet, dass** n kleiner oder gleich 5 ist.

5. Verfahren nach Anspruch 3 oder 4, **dadurch gekennzeichnet, dass** das Tastverhältnis d alternierend für eine Zeit $T_1$ auf das dem Soll-Tastverhältnis $d_{Soll}$ nächstliegende kleinere Verhältnis m/n und für eine Zeit $T_2$ auf das dem Soll-Tastverhältnis $d_{Soll}$ nächstliegende größere Verhältnis m/n festgelegt wird, und dass $T_1$ und $T_2$ so gewählt sind, und dass die Zeiten $T_1$ und $T_2$ so gewählt werden, dass das Tastverhältnis d im zeitlichen Mittel gleich dem Soll-Tastverhältnis $d_{Soll}$ ist.

6. Verfahren nach einem der Ansprüche 1 bis 5, **dadurch gekennzeichnet, dass** der eingestellte Radiosender ein amplitudenmodulierter Radiosender ist.

7. Verfahren nach einem der Ansprüche 1 bis 5, **dadurch gekennzeichnet, dass** der eingestellte Radiosender ein frequenzmodulierter Radiosender ist.

**Claims**

1. Method for controlling an electrical load by means of pulse-width modulation, a desired switching frequency $f_{Soll}$ and a desired duty cycle $d_{Soll}$ being predetermined, the carrier frequency $f_{ch}$ of a set radio station being determined, and the actual switching frequency $f_{sw}$ being matched to the carrier frequency $f_{ch}$ of the radio station in such a manner such that a multiple $k*f_{sw}$ of the actual switching frequency $f_{sw}$ with an integer factor k is equal to the carrier frequency $f_{ch}$, **characterized in that** the actual switching frequency $f_{sw}$ is fixed at the value which is closest to the desired switching frequency $f_{Soll}$ and for which the amplitude of a harmonic $k*f_{sw}$ in the harmonic spectrum of the actual switching frequency $f_{sw}$ is smaller than the amplitudes of its lower $(k-1)* f_{sw}$ and upper $(k+1)* f_{sw}$ adjacent harmonics.

2. Method according to claim 1, **characterized in that** the duty cycle d is set to a ratio n/m close to the target duty cycle $d_{Soll}$, where m and n are natural numbers, and that the actual switching frequency $f_{sw}$ is set to a value for which the frequency $k*f_{sw}$ assumes the value closest to the target switching frequency $f_{Soll}$, for which k/m is a natural number.

3. Method according to claim 2, **characterized in that** n is less than or equal to 10.

4. Method according to claim 2, **characterized in that** n is less than or equal to 5.

5. Method according to claim 3 or 4, **characterized in that** the duty cycle d is alternately set for a time $T_1$ to the smaller ratio m/n closest to the nominal duty cycle $d_{Soll}$ and for a time $T_2$ to the larger ratio m/n closest to the nominal duty cycle $d_{Soll}$, and **in that** $T_1$ and $T_2$ are selected such that the times $T_1$ and $T_2$ are selected such that the duty cycle d is equal to the nominal duty cycle $d_{Soll}$ as a time average.

6. Method according to any one of claims 1 to 5, **characterized in that** the set radio transmitter is an amplitude modulated radio transmitter.

7. Method according to any one of claims 1 to 5, **characterized in that** the set radio transmitter is a frequency-modulated radio transmitter.

**Revendications**

1. Procédé de commande d'une charge électrique par modulation de largeur d'impulsion, selon lequel on prédétermine une fréquence de commutation de consigne $f_{Soll}$ et un rapport cyclique de consigne $d_{Soll}$ on détermine la fréquence porteuse $f_{ch}$ d'une station radio réglée et on adapte la fréquence de commutation réelle $f_{Sw}$ à la fréquence porteuse $f_{ch}$ de la station radio de manière de sorte qu'un multiple $k*f_{sw}$ de la fréquence de commutation réelle $f_{sw}$ avec un facteur entier k est égal à la fréquence porteuse $f_{ch}$, **caractérisé en ce que** la fréquence de commutation réelle $f_{sw}$ est fixée à la valeur qui est la plus proche de la fréquence de commutation souhaitée $f_{Soll}$ et pour laquelle l'amplitude d'un harmonique $k*f_{sw}$ dans le spectre harmonique de la fréquence de commutation réelle $f_{sw}$ est inférieure aux amplitudes de ses harmoniques adjacents inférieur $(k-1)*f_{sw}$ et supérieur $(k+1)*f_{sw}$.

2. Procédé selon la revendication 1, **caractérisé en ce que** le rapport cyclique d est fixé à un rapport n/m proche du rapport cyclique cible $d_{Soll}$, où m et n sont des nombres naturels, et **en ce que** la fréquence de commutation réelle $f_{sw}$ est fixée à une valeur pour laquelle la fréquence $k*f_{sw}$ prend la valeur la plus proche de la fréquence de commutation cible $f_{Soll}$ pour laquelle k/m est un nombre naturel.

3. Procédé selon la revendication 2, **caractérisée en ce que** n est inférieur ou égal à 10.

4. Procédé selon la revendication 2, **caractérisée en ce que** n est inférieur ou égal à 5.

5. Procédé selon la revendication 3 ou 4, **caractérisé en ce que** le rapport cyclique d est réglé alternativement pendant un temps $T_1$ sur le rapport m/n le plus petit le plus proche du rapport cyclique nominal $d_{Soll}$ et pendant un temps $T_2$ sur le rapport m/n le plus grand le plus proche du rapport cyclique nominal $d_{Soll}$ et **en ce que** $T_1$ et $T_2$ sont choisis de telle sorte que les temps $T_1$ et $T_2$ sont choisis de telle sorte que le rapport cyclique d est égal au rapport cyclique nominal $d_{Soll}$ en tant que moyenne temporelle.

6. Procédé selon l'une quelconque des revendications 1 à 5, **caractérisée en ce que** l'émetteur radio réglé est un émetteur radio à modulation d'amplitude.

7. Procédé selon l'une des revendications 1 à 5, **caractérisé en ce que** l'émetteur radio réglé est un émetteur radio à modulation de fréquence.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011118044 A1